# EUROPÄISCHE PATENTSCHRIFT

(11) **EP 4 189 337 B1**
(45) Veröffentlichungstag und Bekanntmachung des Hinweises auf die Patenterteilung: **05.11.2025**
(21) Anmeldenummer: 20754191.3
(22) Anmeldetag: 03.08.2020
(51) Int. Cl.: G01F 23/284

(54) **VERFAHREN ZUR VERTEILTEN BESTIMMUNG EINES FÜLLSTANDS ODER GRENZSTANDS**
METHOD FOR DISTRIBUTED DETERMINATION OF A FILLING LEVEL
PROCÉDÉ DE DÉTERMINATION DISTRIBUÉE D'UN NIVEAU DE REMPLISSAGE

(43) Veröffentlichungstag der Anmeldung: 07.06.2023
(73) Patentinhaber: VEGA Grieshaber KG, 77709 Wolfach (DE)
(72) Erfinder: WELLE, Roland, 77756 Hausach (DE); HOFERER, Christian, 77652 Offenburg (DE)
(74) Vertreter: Maiwald GmbH
(86) Internationale Anmeldenummer: PCT/EP2020/071825
(87) Internationale Veröffentlichungsnummer: WO 2022/028670

(56) Entgegenhaltungen:
- EP-A1- 3 575 817
- WO-A1-2014/019948
- DE-A1- 102013 213 040
- US-A1- 2012 130 509

## Beschreibung

### Gebiet der Erfindung

Die Erfindung betrifft ein Verfahren zur Bestimmung eines Füllstands oder Grenzstands eines Füllgutes. Insbesondere betrifft die Erfindung ein Verfahren zur verteilten Bestimmung eines Füllstands oder Grenzstands. Weiterhin betrifft die Erfindung ein System, eine Verwendung ein Programmelement und ein computerlesbares Medium.

### Hintergrund

Zur Bestimmung eines Füllstands oder Grenzstands eines Füllgutes werden Messgeräte, insbesondere Feldgeräte mit Sensoren zur Füllstand- oder Grenzstandbestimmung eingesetzt. Derartige Messgeräte können beispielsweise einen Radarsensor und/oder andere Sensoren aufweisen. Zumindest einige dieser Messgeräte können mit einer Cloud kommunizieren und an diese die im Sensor ermittelten Daten übertragen.

Dokument DE 10 2013 213 040 A1 betrifft eine Übertragungsvorrichtung für ein Messgerät und ein Verfahren zum Übertragen von Rohmessdaten mit einer Übertragungsvorrichtung. Dokument WO 2014 019 948 A1 betrifft ein Verfahren zur Bestimmung und/oder Überwachung des Füllstands eines Mediums in einem Behälter mit einem Messgerät, das nach dem Laufzeitmessverfahren arbeitet.

Dokument EP 3 575 817 A1 betrifft ein Verfahren zur Füllstandmessung mit einem Radarfüllstandmessgerät.

Dokument US 2012 130 509 A1 betrifft ein Verfahren zum Einstellen eines Messgeräts zur Bestimmung oder Überwachung einer physikalischen oder chemischen Prozessgröße eines Mediums in einem Behälter.

### Zusammenfassung

Es ist Aufgabe der Erfindung, einen Sensor bereitzustellen, der einen sparsamen Betriebsmodus aufweist. Diese Aufgabe wird durch den Gegenstand der unabhängigen Patentansprüche gelöst. Weiterbildungen der Erfindung ergeben sich aus den Unteransprüchen und der folgenden Beschreibung.

Ein Aspekt betrifft ein Verfahren nach Anspruch 1 zur verteilten Bestimmung eines Füllstands oder

Grenzstands eines Füllgutes mittels eines Sensors, mit den Schritten:
d) Bestimmen, durch den Sensor, von charakteristischen Kennwerten signifikanter Reflexionsstellen der Echokurve; und
e) Übertragen, durch den Sensor, der charakteristischen Kennwerte signifikanter Reflexionsstellen an einen Server, wobei die charakteristischen Kennwerte zur Bestimmung des Füllstands in einem Entscheidungsprozess verwendbar sind.

Das Verfahren ist als zur "verteilten" Bestimmung des Füllstands oder Grenzstands klassifiziert. Unter "verteilt" wird dabei insbesondere eine Aufteilung von einem oder mehreren Schritten und/oder Aufgaben des Verfahrens zwischen mehreren Rechnern oder Rechensystemen verstanden, zum Beispiel zwischen einem Messgerät, Feldgerät und/oder Sensor einerseits und einer Cloud oder einer anderen Art eines Servers - z.B. auch einem mobilen Gerät wie ein Laptop oder Tablet - andererseits. Alternativ oder zusätzlich können auch weitere Rechensysteme an dem Verfahren beteiligt sein, und/oder können die logischen Einheiten wie "Messgerät etc." oder "Server etc." zwischen mehreren physikalischen Einheiten aufgeteilt sein. Diese Messgeräte können beispielsweise eingesetzt werden, um einen bestimmten Pegel eines Füllguts an einer Messstelle, z.B. in einem Behälter, anzuzeigen, d.h. um anzuzeigen, ob eine vordefinierte obere, untere oder sonstige Grenze des Füllstands in dem Behälter erreicht wurde. Der Behälter kann ein Gefäß oder Messtank von beliebiger Form sein. Der Behälter kann auch ein Gerinne, beispielsweise ein Bach- oder Flussbett, sein.

Dem Bestimmen von charakteristischen Kennwerten signifikanter Reflexionsstellen kann ein Aussenden und/oder Empfangen eines Messsignals vorausgehen. Der Sensor zum Aussenden und/oder Empfangen des Messsignals kann beispielsweise ein Hochfrequenzfrontend, z.B. für Radarwellen, ein Ultraschallfrontend und/oder ein Laserfrontend aufweisen. Weiterhin kann eine Berechnung einer Echokurve durch den Sensor durchgeführt werden. Die Berechnung der Echokurve kann beispielsweise durch Wandeln des reflektierten und empfangenen Messsignals in digitale Abtastpunkte erfolgen. Dabei kann eine Vielzahl von Abtastpunkten bestimmt werden, z.B. mehr als 100, mehr als 1000, mehr als 10000, z.B.

1024, 2048, 4096 Abtastpunkte. Durch den Sensor und/oder das Messgerät werden daraus charakteristische Kennwerte signifikanter Reflexionsstellen bestimmt, beispielsweise Entfernungswerte, Positionswerte und/oder Amplitudenwerte und/oder andere Werte, die signifikante Reflexionsstellen charakterisieren. Als signifikante Reflexionsstellen werden dabei solche Reflexionsstellen angesehen, die zur Bestimmung des Füllstands beitragen können oder dafür verwendbar sind. Diese spezifische Verwendbarkeit kann vordefinierte Informationen und/oder Formate der übertragenen charakteristischen Kennwerte beinhalten. Signifikante Reflexionsstellen können z.B. in Form lokaler Maxima und/oder anderer Werte der in einer Echokurve repräsentiert sein. Erfindungsgemäß weist die Echokurve eine deutlich geringere Anzahl an signifikanten Reflexionsstellen auf, als an digitalen Abtastpunkten bestimmt wurden. Die Art und Anzahl der identifizierten signifikanten Reflexionsstellen kann von dem Sensor in Abhängigkeit vom gewandelten Messsignal festlegt werden. Die Ermittlung der signifikanten Reflexionsstellen kann eine Art von Datenreduktion des gewandelten Messsignals beinhalten. Dies kommt insbesondere dann zum Tragen, wenn der Sensor (und/oder das Messgerät, Feldgerät, etc.) ausschließlich die Kennwerte der identifizierten signifikanten Reflexionsstellen an den Server (und/oder die Cloud etc.) überträgt. Die charakteristischen Kennwerte signifikanter Reflexionsstellen sind zur Bestimmung des Füllstands in einem Entscheidungsprozess verwendbar. Der Entscheidungsprozess kann beispielsweise in dem Server durchgeführt werden. Details und Beispiele für den Entscheidungsprozess werden im Weiteren erläutert.

Vorteilhafterweise kann damit z.B. erreicht werden, einen Sensor bereitzustellen, der einen sparsamen Betriebsmodus aufweist, und insbesondere, dass nicht alle der in dem Sensor ermittelten Daten von dem Sensor oder Messgerät zu der Cloud oder zu dem Server übertragen werden. Insbesondere kann damit eine deutliche Datenreduktion der zu übertragenden Daten erreicht werden. Dies kann besonders vorteilhaft sein, wenn die Übertragung, der Übertragungskanal und/oder das Übertragungsmodul eine limitierte Bandbreite aufweist, z.B. aufgrund von gesetzlichen und/oder anderen Bestimmungen und/oder weil zur Übertragung eine Schmalband-Kommunikation eingesetzt wird. Dies kann beispielsweise zu einer Reduktion des Stromverbrauchs des Sensors beitragen.

Darüber hinaus kann mit dem Verfahren erreicht werden, dass der Sensor bzw. das Messgerät nicht mehr parametriert werden muss. In vielen Fällen wird es damit möglich, für die Bestimmung eines Füllstands, Grenzstands und/oder weiterer Werte ein "Standardgerät" bzw. ein generisches Füllstandmessgerät zur Verfügung zu stellen, das ohne weitere Parametrierung an einer Messstelle eingesetzt werden kann. Eine gegebenenfalls erforderliche "Parametrierung" oder anwendungsabhängige Parametrierung kann z.B. auf den Server und/oder die Cloud verlagert werden, wo zudem eine höhere Rechenleistung, eine Datenbank - z.B. mit Daten zu diesem Messgerät und/oder dessen Historie -, ein neuronales Netz und/oder weitere Einrichtungen zu Verfügung stehen können. Diese "Parametrierung" kann z.B. auf Basis der Ergebnisse des Entscheidungsprozesseses durchgeführt werden.

Erfindungsgemäß werden in Schritt e) ausschließlich die charakteristischen Kennwerte signifikanter Reflexionsstellen an den Server übertragen. Dies führt vorteilhafterweise zu einer weiteren Reduzierung der übertragenen Datenmenge.

Erfindungsgemäß weist das Verfahren nach Anspruch 1 weitere Schritte auf:
a) Montage des Sensors an einer Messstelle;
b) Aussenden, durch den Sensor, eines Messsignals; und
c) Empfangen, durch den Sensor, des reflektierten Messsignals und Berechnung einer Echokurve.

Dabei kann die Montage des Sensors an der Messstelle zumindest bei einigen Sensoren vorteilhafterweise ohne vorherige Parametrierung stattfinden. Das Aussenden des Messsignals, das Empfangen des reflektierten Messsignals und die Berechnung einer Echokurve durch den Sensor kann z.B. in einer Weise wie oben und/oder nachfolgend beschrieben durchgeführt werden.

In einer Ausführungsform kann die Übermittlung der Kennwerte zur Cloud funkbasiert erfolgen. Dies kann Montage und Einsatz des Messgeräts vereinfachen.

In einigen Ausführungsformen ist der Sensor als ein nicht-parametrierter Sensor ausgeführt. Dabei kann der Sensor z.B. einen "(räumlichen) Ort" und/oder eine Amplitude des reflektierten Messsignals senden, optional zusätzlich ein oder mehrere benachbarte Amplitudenmaxima. Zum Beispiel können für Testzwecke und/oder zyklisch auch weitere Daten gesendet werden. Dies ist insbesondere vorteilhaft, wenn der Laufzeitsensor sich in einem geschlossenen Gehäuse befindet und kundenseitig bzw. anwenderseitig deshalb keine Parametrierung möglich ist. Das geschlossene Gehäuse kann z.B. zu einer Robustheit und/oder Unempfindlichkeit gegenüber chemischen, mechanischen und/oder anderen Einflüssen auf den Sensor führen. Das geschlossene Gehäuse kann beispielsweise auch dazu ausgeführt sein, den Sensor in einer explosionsgefährdeten Umgebung einzusetzen.

Weiterhin kann damit der Sensor bzw. Laufzeitsensor autark betrieben werden. Insbesondere Sensoren, deren Inbetriebnahme nur durch eine Montage und optional eine Aktivierung erfolgt, können als autark aufgefasst werden. Derartige Sensoren können z.B. über einen Energiespeicher verfügen, sodass eine externe Stromversorgung nicht nötig ist. Darüber hinaus kann eine Parametrierung am Sensor selbst nicht erforderlich sein.

In einigen Ausführungsformen ist die Übertragung von dem Sensor oder Messgerät an den Server unidirektional ausgeführt. Dies kann das Gerät beispielsweise vor Hackerangriffen schützen.

In einigen Ausführungsformen umfassen die charakteristischen Kennwerte lokale Amplitudenmaxima der Echokurve. Die lokalen Amplitudenmaxima der Echokurve können z.B. herangezogen werden, um die signifikanten Reflexionsstellen zu bestimmten. Dabei können zum Beispiel "Ort" und Amplitude der Amplitudenmaxima bestimmt und gesendet werden. Die lokalen Amplitudenmaxima können eine geringere Amplitude aufweisen als ein globales Amplitudenmaximum. Beispielsweise können die höchsten lokalen Amplitudenmaxima z.B. 10 dB, 20 dB, 30 dB von dem globalen Maximum entfernt sein. In zumindest einigen Fällen können die lokalen Amplitudenmaxima mit recht geringem Aufwand bestimmbar sein, beispielsweise anhand von Kennwerten wie "Ort" und/oder "Amplitude".

Dies kann vorteilhafterweise zu einer weiteren Reduzierung des Energiebedarfs des Messgeräts beitragen.

In einigen Ausführungsformen umfassen die charakteristischen Kennwerte nur solche lokalen Amplitudenmaxima der Echokurve, die einen vordefinierten Amplitudenschwellwert überschreiten. Der vordefinierte Amplitudenschwellwert kann beispielsweise 10 dB, 20 dB, 30 dB und/oder ein anderer Wert von dem globalen Maximum entfernt sein. Der Amplitudenschwellwert kann z.B. von dem "(räumlichen) Ort" abhängig sein; so kann z.B. der Amplitudenschwellwert für ein lokales Amplitudenmaximum, das weiter entfernt ist von dem sendenden Frontend niedriger gewählt werden als für einen räumlich nahen Ort. Der vordefinierte Amplitudenschwellwert kann auch anpassbar sein, z.B. abhängig von vorangegangenen Messungen.

In einigen Ausführungsformen werden Werte eines definierten Abstands von den Orten oder Positionen lokaler Amplitudenmaxima der Echokurve als die Orte, Positionen und/oder Abstandswerte signifikanter Reflexionsstellen bestimmt. Dabei können beispielsweise "Ort" und Amplitude von ca. 70 % (oder -3 dB) unterhalb des globalen Amplitudenmaximums gesendet werden. Dies hat sich in einer Reihe von praktischen Versuchen als besonders aussagekräftig für die Bestimmung eines Füllstands oder Grenzstands erwiesen.

In einigen Ausführungsformen wird nur eine ausgezeichnete Untermenge der charakteristischen Kennwerte signifikanter Reflexionsstellen an den Server übertragen. Dabei kann die ausgezeichnete Untermenge durch ein oder mehrere höchste Amplitudenmaxima und/oder durch Überschreiten einer minimalen räumlichen Entfernung von einem Sender des Messsignals bestimmt sein. Die ausgezeichnete Untermenge kann eine echte Untermenge sein, und kann auf diese Weise die Menge der übertragenen Daten weiter reduzieren. Dabei kann beispielsweise eine Vorauswahl an signifikanten Reflexionsstellen - z.B. über Position und Amplitude - getroffen werden. Beispielsweise können, wenn mehrere höchste Amplitudenmaxima gemessen wurden, z.B. die höchsten Amplitudenmaxima ausgewählt werden. Dies kann vorteilhafterweise geschehen, ohne dabei die generischen Eigenschaften des autarken Sensors zu verlieren, z.B. ohne dass eine Art von Parametrierung des Sensors durchgeführt werden muss.

Neben "Ort" und "Amplitude" können weitere Eigenschaften als charakteristische Kennwerte einer Reflexionsstelle verwendet werden. So kann z.B. ein Signal-Rauschabstand, ein Signal-Störabstand, eine Ausprägung und/oder Form, eine Position eines Anfangs und/oder Endes der Reflexionsstelle, eine Breite der Reflexionsstelle und/oder weitere Werte als charakteristischer Kennwert angesehen oder verwendet werden. Das Messgerät kann so ausgeführt sein, dass es "selbständig" - d.h. z.B. regelbasiert - erkennt, welche charakteristischen Merkmale relevant für das Senden (und gegebenenfalls, für einen Server, für ein Transformieren in einen Füllstand verwendbar) sind. So kann z.B. das Messgerät lediglich diejenigen charakteristischen Merkmale übermitteln, die als besonders relevant und/oder als Basisinformation für einen Server für ein Transformieren in einen Füllstandswert erforderlich sind. So kann bei eindeutigen Echoverhältnissen beispielsweise nur eine Übertragung eines räumlichen Orts des Amplitudenmaximums genügen. Bei weniger klaren Echoverhältnissen, z.B. bei mehreren Reflexionsstellen, können - z.B. neben dem räumlichen Ort - zusätzlich die Amplitude der Reflexionsstellen und/oder weitere charakteristische Merkmale übertragen werden. Es sei dazu angemerkt, dass das Messgerät und der Server zwar jeweils autonom arbeiten; sie können jedoch in Kombination aufeinander abgestimmt sein.

Ein Aspekt betrifft ein Verfahren zur verteilten Bestimmung eines Füllstands oder Grenzstands eines Füllgutes mittels eines Servers, mit den Schritten:
f) Empfangen, durch den Server, von charakteristischen Kennwerten signifikanter Reflexionsstellen; und
g) Transformieren, durch den Server mittels des Entscheidungsprozesses und/oder unter Verwendung von Parameterdaten, der charakteristischen Kennwerte signifikanter Reflexionsstellen in den Füllstand des Füllgutes und/oder in einen den Füllstand des Füllgutes repräsentierenden Wert.

Dabei können die charakteristischen Kennwerte können z.B. von einem Sensor erzeugt und/oder übertragen worden sein. Der Server kann für das Empfangen und für eine Weiterverarbeitung, z.B. für das Transformieren, der identifizierten signifikanten Reflexionsstellen eingerichtet sein. Dabei können die Kennwerte der empfangenen signifikanten Reflexionsstellen mittels des Entscheidungsprozesses und/oder unter Verwendung von Parameterdaten in den Füllstand und/oder die Füllhöhe des Füllgutes oder Mediums transformiert werden. Die Parameterdaten und/oder Parametrisierungsdaten können dabei die Auswahl der Reflexionsstelle des zu messenden Mediums aus der Summe aller ermittelnder Reflexionsstellen beinhalten oder beeinflussen. Dies kann z.B. eine Hinzunahme einer speziell für diese Messstelle gespeicherte individuelle Parametrierung, von Historieninformation und/oder weiterer Informationen umfassen. Der auf diese Weise ermittelte Füllstand und/oder Grenzstand kann anschließend auf einer Schnittstelle, einer Anzeige, etc. ausgegeben werden und/oder an einen Speicherbereich, eine Datenbank, etc. übertragen werden.

Der Entscheidungsprozess kann beispielsweise im Fall des Empfangs von charakteristischen Kennwerten einer einzigen signifikanten Reflexionsstelle beinhalten, dass ein leerer oder ein überfüllter Tank erkannt wird. Bei diesem Entscheidungsprozess kann z.B. eine Historie des Füllstands berücksichtigt werden, also ob z.B. in jüngster Vergangenheit ein hoher oder ein niedriger Füllstand bestimmt wurde. In einem anderen Fall, in dem charakteristische Kennwerte von zwei (unterschiedlichen) signifikanten Reflexionsstellen empfangen wurden, kann der Entscheidungsprozess zu dem Ergebnis kommen, dass es sich bei einer der zwei unterschiedlichen signifikanten Reflexionsstellen um eine Reflexionsstelle handelt, welche mit einer Reflektion an einer Füllgutoberfläche korreliert. Dabei kann der Entscheidungsprozess z.B. eine Heuristik und/oder eine Statistik beinhalten. Der Entscheidungsprozess kann auch eine triviale Entscheidung beinhalten, z.B. einen übertragenen Kennwert signifikanter Reflexionsstellen direkt zu verwenden; dies ist aber nicht Teil des Schutzbereichs. Weitere Beispiele für den Entscheidungsprozess werden im Folgenden, z.B. exemplarisch anhand einer Auswahl von Reflexionsmustern, erläutert.

In einigen Ausführungsformen weist das Verfahren weitere Schritte auf:
h) Bildung, durch den Server, von Historieninformationen der charakteristischen Kennwerte der Reflexionsstellen und/oder des Füllstands mittels eines Tracking Algorithmus; und
i) Anwendung, durch den Server, der Historieninformationen auf die empfangenen charakteristischen Kennwerte der Reflexionsstellen.

Die Historieninformationen können für einen speziellen Sensor gesammelt worden sein und/oder aus Historieninformationen einer Vielzahl von Sensoren gebildet worden sein. Die Historieninformationen können für ein Postprocessing oder eine Nachprozessierung der Kennwerte signifikanter Reflexionsstellen verwendet werden. Beispielsweise können damit die Füllstände oder Füllhöhen plausibilisiert werden, insbesondere auch bei lückenhaften Messdaten z.B. durch Interpolation der bekannten historischen Füllstände. Ferner können damit zum Beispiel langsame Veränderungen, z.B. durch Verschmutzungen, berücksichtigt werden. Weiterhin können bei der Nachprozessierung in der Cloud Kundeneingaben zugelassen und/oder berücksichtigt werden. So kann eine anwendungs- und/oder geräteabhängige Parametrierung der empfangenen Daten des unparametrierten Sensors zu einer weiteren Verbesserung der Messqualität beitragen.

In einigen Ausführungsformen werden die Parameterdaten durch den Server mit dem Sensor verbunden, beispielsweise logisch verbunden, z.B. mittels eines Datenbankeintrags. So kann diese Art der Verbindung z.B. auf eine Seriennummer des Sensors angewandt werden, so dass die Daten jedes Sensors z.B. eine spezifisch adaptierte Nachprozessierung erfahren. Weiterhin können damit z.B. Zugriffsberechtigungen geregelt werden, so dass zum Beispiel Kundeneingaben nur für eine auf diese Weise bestimmte Gruppe von Sensoren zugelassen und/oder berücksichtigt werden.

In einigen Ausführungsformen umfassen die Parameterdaten oder die anwendungs- und/oder geräte-abhängigen Parameter eine Behälterhöhe, einen Behälterquerschnitt, eine Eigenschaft des Mediums und/oder eine Selektion eines Anwendungstyps. Ein derartiger Anwendungstyp kann beispielsweise eine Messung in einem Lagertank, eine Messung eines Flusspegels und/oder weitere Werte umfassen. Die Eigenschaft des Mediums kann z.B. dessen spezifische Permittivität und/oder andere charakteristische Werte des Mediums umfassen. Diese Parameter können dem Clouddienst z.B. bei der Nachprozessierung bekannt gemacht werden. Damit kann das Postprocessing der empfangenen Daten auf dem Server unter Nutzung der serverseitig vorhandenen, anwendungsabhängigen Parameter beitragen, z.B. im Rahmen des Transformierens der charakterisierenden Kennwerte signifikanter Reflexionsstellen mittels Parameterdaten in den Füllstand des Füllgutes.

In einigen Ausführungsformen wird das Transformieren der charakteristischen Kennwerte signifikanter Reflexionsstellen unter Berücksichtigung von Uhrzeit, Wetterdaten, Logistik-daten und/oder gelernten Mustern durchgeführt. Alternativ oder zusätzlich kann die Nachprozessierung externe Informationsquellen berücksichtigen. Das Erfassen der Uhrzeit kann beispielsweise typische Störungen und/oder Temperaturen einbeziehen. So kann der Server z.B. auf Wetterdaten, z.B. für Temperatur, Feuchtigkeit, etc. zugreifen. Dies kann etwa für eine Bestimmung einer Anhaftung mit Kondensat verwendet werden. Logistikdaten können z.B. Zeitpunkte einer Befüllung oder Entleerung eines Tanks umfassen, um so eine Änderung des Füllstandes anhand von geplanten Befüll- bzw. Entleerzeitpunkten zu plausibilisieren. Gelernte Muster können darüber hinaus verwendet werden um z.B. anhand Ausprägungen verschiedener Konstellationen an übertragener Reflexionsstellen auf den Füllstand zu schließen.

In einigen Ausführungsformen umfasst das Transformieren der charakteristischen Kennwerte signifikanter Reflexionsstellen einen Abgleich des Messwertes und/oder eine Skalierung des Messwertes. Der Abgleich des Messwertes kann z.B. eine Füllhöhe umfassen, bei der etwa 0 m einem Füllstand oder einer Füllhöhe von 0 % entsprechen, und 1 m Füllhöhe 100 % Füllstand entsprechen. Die Skalierung kann etwa umfassen, dass 0 % Füllstand 0 Liter Füllmenge entsprechen, und 100 % z.B. 500 Litern entsprechen. Die sich nach einem Abgleich des Messwertes und/oder einer Skalierung des Messwertes ergebenden finalen Zahlenwerte können als weitere Beispiele für einen den Füllstand des Füllgutes repräsentierenden Wert verstanden werden.

Erfindungsgemäß weist das Verfahren nach Anspruch 1 weitere Schritte auf:
j) Bestimmen, durch den Server, einer ausgewählten Teilmenge der charakteristischen Kennwerte signifikanter Reflexionsstellen; und
k) Übertragen, durch den Server, der ausgewählten Teilmenge der charakteristischen Kennwerte signifikanter Reflexionsstellen an den Sensor.

Dabei kann vorgesehen sein, nach erfolgter Entscheidung durch den Entscheidungsprozess die ausgewählte Teilmenge z.B. nach einem Kriterium "Wahrscheinlichkeit der korrekten Entscheidung" auszuwählen. Beispielsweise in Fällen, in denen eine vordefinierte Wahrscheinlichkeit unterschritten wird, kann eine Verfeinerung der charakteristischen Kennwerte an diesen signifikanten Reflexionsstellen sinnvoll und/oder erforderlich sein. Dazu kann der Server die ausgewählte Teilmenge z.B. an den Sensor übertragen. Die ausgewählte und zu übertragende Teilmenge kann so gestaltet sein - z.B. durch bestimmte Informationen und/oder Formate der ausgewählten Teilmenge -, dass diese für eine Weiterverarbeitung durch den Sensor verwendbar ist.

Erfindungsgemäß weist das Verfahren nach Anspruch 1 weitere Schritte auf:
I) Empfangen, durch den Sensor, der ausgewählten Teilmenge der charakteristischen Kennwerte signifikanter Reflexionsstellen;
m) Verfeinern, durch den Sensor, der ausgewählten Teilmenge der charakteristischen Kennwerte signifikanter Reflexionsstellen; und
n) Übertragen, durch den Sensor, von verfeinerten charakteristischen Kennwerten der ausgewählten Teilmenge der charakteristischen Kennwerte signifikanter Reflexionsstellen. Beispielsweise kann für die ausgewählte Teilmenge der charakteristischen Kennwerte einer dadurch bestimmten signifikanten Reflexionsstelle anhand der in dem Sensor (zumindest kurzfristig) gespeicherten und dort verfügbaren, großen Menge an Punkten eines Signals, beispielsweise einer Echokurve, mit erhöhter Präzision ein Messwert von der Recheneinheit des Sensors bestimmt werden. Dieser Messwert, der z.B. nur wenige Bytes an Nutzdaten umfassen kann, kann dann - z.B. über einen Funkkanal - an den Server übermittelt werden, wo weitere Schritte wie Linearisierung und Skalierung durchgeführt werden können, und der resultierende Messwert dadurch mit verbesserter Präzision bereitgestellt werden kann.

Ein Aspekt betrifft einen Sensor, der zur Durchführung der Schritte des Verfahren wie oben und/oder nachfolgend beschrieben eingerichtet ist.

Ein Aspekt betrifft einen Server, der zur Durchführung der Schritte des Verfahren wie oben und/oder nachfolgend beschrieben eingerichtet ist.

Ein Aspekt betrifft ein System zur verteilten Bestimmung eines Füllstands oder Grenzstands eines Füllgutes, wobei das System einen Sensor und einen Server aufweist, die zur Durchführung der Verfahrensschritte wie oben und/oder nachfolgend beschrieben eingerichtet sind.

Ein Aspekt betrifft eine Verwendung eines Systems wie oben und/oder nachfolgend beschrieben zur verteilten Bestimmung eines Füllstands oder Grenzstands eines Füllgutes.

Ein Aspekt betrifft ein Programmelement, welches, wenn es auf einem Sensor und/oder einem Server wie oben und/oder nachfolgend beschrieben ausgeführt wird, den Sensor und/oder den Server anleitet, das Verfahren wie oben und/oder nachfolgend beschrieben durchzuführen.

Ein Aspekt betrifft ein computerlesbares Medium, auf dem das hier beschriebene Programmelement gespeichert ist.

Es sei noch angemerkt, dass die verschiedenen Ausführungsformen miteinander kombiniert werden können.

Zur weiteren Verdeutlichung wird die Erfindung anhand von in den Figuren abgebildeten Ausführungsformen beschrieben. Diese Ausführungsformen sind nur als Beispiel, nicht aber als Einschränkung zu verstehen.

### Kurze Beschreibung der Figuren

Dabei zeigt:
- **Fig. 1**: schematisch ein Messgerät gemäß einer Ausführungsform;
- **Fig. 2**: schematisch ein System zur verteilten Bestimmung eines Füllstands oder Grenzstands gemäß einer Ausführungsform;
- **Fig. 3** bis **6**: schematisch eine Reihe von beispielhaften Echokurven;
- **Fig. 7**: ein Flussdiagramm mit einem Verfahren gemäß einer Ausführungsform.

### Detaillierte Beschreibung von Ausführungsformen

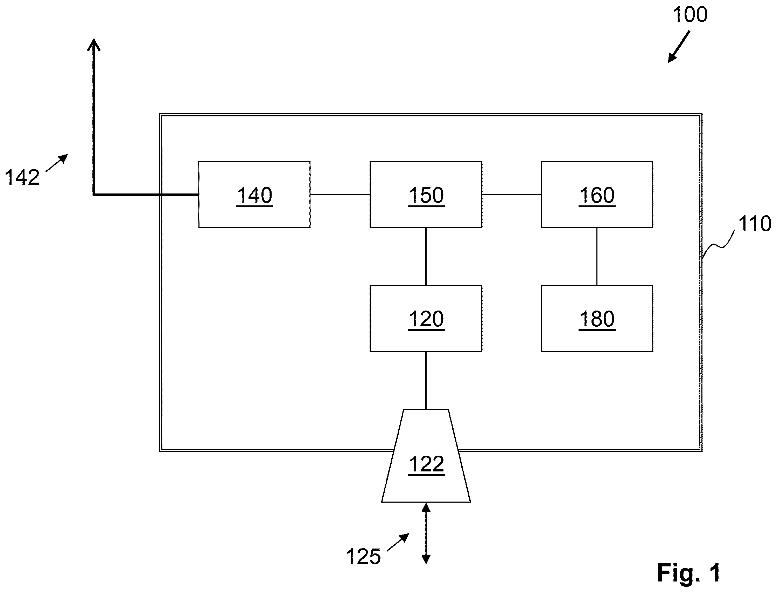

**Fig. 1** zeigt schematisch ein Messgerät 100 gemäß einer Ausführungsform. Das Messgerät 100 kann ein Hochfrequenzfrontend, ein Ultraschallfrontend und/oder ein Laserfrontend aufweisen. Schematisch dargestellt ist ein Hochfrequenzfrontend, z.B. für Radarwellen; dies dient aber nur zur Verdeutlichung und ist nicht als Einschränkung zu betrachten. Das Messgerät 100 kann z.B. als autonom arbeitendes Radarfüllstandmessgerät ausgeführt sein und/oder ein weiteres der genannten Frontends aufweisen.

Das Messgerät 100 kann z.B. ein Gehäuse 110 aufweisen, insbesondere ein hermetisch abgedichtetes, die Elektronik vollständig umschließendes Gehäuse, welches z.B. das Eindringen von Staub oder Feuchtigkeit wirksam unterbinden kann. In dem Gehäuse 110 kann eine Batterie oder ein Akkumulator 180 angeordnet sein, mittels dessen die komplette Sensorelektronik mit Energie versorgt werden kann. Als Einsatzbeispiel kann z.B. angenommen werden, dass das Messgerät 100 in vorgebbaren Zeitabständen, beispielsweise einmal pro Tag, aktiviert wird, indem ein steuerbarer Schalter 160 die Energieversorgung für einen Prozessor 150 freigibt. Der Prozessor 150 initialisiert sich daraufhin und/oder bootet ein Betriebssystem. Nach Abschluss der Initialisierung kann z.B. eine im Prozessor 150 integrierte Ablauflogik das Erfassen von Messdaten steuern, die z.B. von einer Messdatenbestimmungseinheit 120 gemessen und zu Verfügung gestellt werden. Hierzu aktiviert der Prozessor zunächst die Messdatenbestimmungseinheit 120, welche beispielsweise ein Hochfrequenzsignal erzeugt, das Hochfrequenzsignal über die Messantenne 122 - z.B. durch eine Sensorwandung - abstrahlt und die vom Füllgut reflektierten Signale wieder empfängt, aufbereitet und schließlich in digitalisierter Form dem Prozessor 150 zur weiteren Verarbeitung zur Verfügung stellt. Der Prozessor 150 kann z.B. als ein Mikrokontroller realisiert sein oder als ein spezieller Teil eines Mikrokontrollers. Der Prozessor 150 kann beispielsweise aus den reflektierten Signalen eine Echokurve und charakteristische Kennwerte zumindest einer in der Echokurve abgebildeten Reflexion oder charakteristische Kennwerte zumindest einer in der Echokurve abgebildeten signifikanten Reflexionsstelle bestimmen. Für die Bestimmung der Echokurve können z.B. bekannte und/oder weiterentwickelte Verfahren, einschließlich der hier beschriebenen Verfahren, verwendet werden.

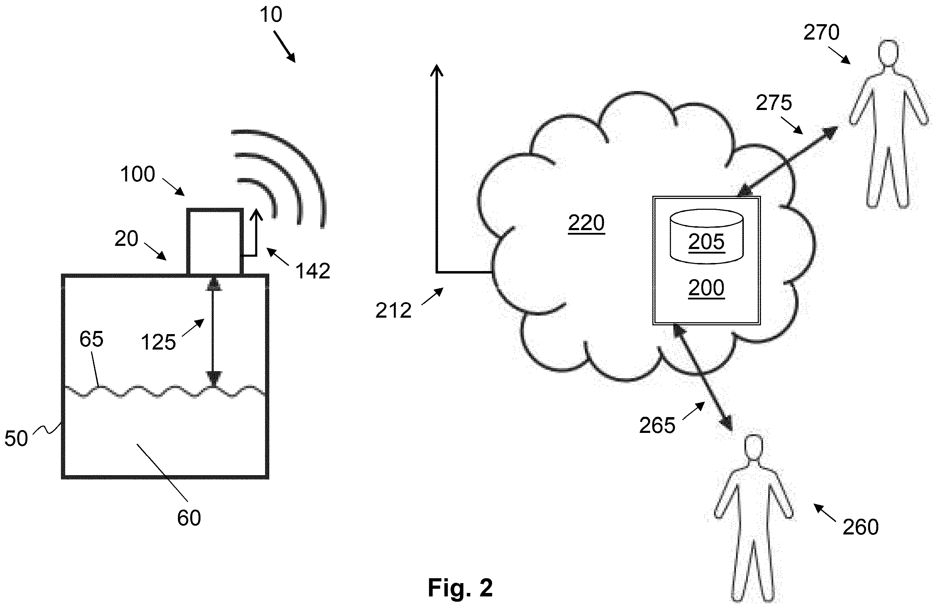

Das Versenden der Daten kann z.B. mittels einer drahtlosen Kommunikationseinrichtung 140 über eine Kommunikationsantenne 142 erfolgen. In manchen Fällen kann es nötig sein, dass für jedes Senden die Kommunikationseinrichtung 140 aktiviert wird. Dafür kann in manchen Fällen z.B. ein zusätzlicher Schalter (nicht abgebildet) verwendet werden und/oder für die Energieversorgung der Kommunikationseinrichtung 140 vorgesehen sein. Die gesendeten Daten können insbesondere charakteristische Kennwerte signifikanter Reflexionsstellen umfassen. Die Daten können z.B. zu einer übergeordneten Cloud-Einheit (siehe z.B. Fig. 2) gesendet werden. Für das Senden können insbesondere energieoptimierte Verfahren zur drahtlosen Kommunikation wie LoRa, LoRaWAN (Long Range Wide Area Network), Sigfox, NB-IoT (NarrowBand loT) und/oder andere energieoptimierte Protokolle und/oder Niedrigenergieweitverkehrnetzwerke verwendet werden. Ein charakteristisches Merkmal zumindest eines Teils dieser Protokolle ist, dass - zur Wahrung der Energieeffizienz - nur wenige Bytes an Nutzdaten übermittelt werden sollen. Nach Übermittlung der charakteristischen Kennwerte signifikanter Reflexionsstellen kann der Übertragungskanal zeitnah wieder geschlossen werden, und die Kommunikationseinrichtung 140 kann deaktiviert werden. Der Prozessor 150 kann nach Abschluss der Messung den steuerbaren Schalter 160 öffnen, wodurch die Komponenten 140, 150, 120, 122 in einen energielosen oder energiesparenden Zustand überführt werden können. Die weitere Verarbeitung der übermittelten Kennwerte und insbesondere die Ermittlung und Bereitstellung eines Messwertes kann z.B. in einer Cloud erfolgen.

In einigen Ausführungsformen kann das Messgerät 100, z.B. aus Energiespar- und/oder aus Kostengründen - weder eine Anzeige- noch eine Bedieneinheit aufweisen, so dass eine Veränderung der Sensoreinstellungen oder ein Softwareupdate nicht vor Ort durchgeführt werden kann.

**Fig. 2** zeigt schematisch ein System 10 zur verteilten Bestimmung eines Füllstands oder Grenzstands, insbesondere zur verteilten Prozessierung von Sensormessdaten und Bereitstellung von Füllständen, gemäß einer Ausführungsform. Auf einem Behälter oder Tank 50 ist eine Sensoreinheit oder Messgerät 100 angeordnet, die ein Messsignal 125 in Richtung einer Oberfläche 65 eines Mediums 60 abstrahlt und das reflektierte Messsignal empfängt. Das Messgerät 100 wandelt das empfangene Messsignal in eine digitale Repräsentation - z.B. in eine Echokurve - und führt damit einen ersten Teil einer Signalverarbeitungskette durch.

Bei einem Radarfüllstandsensor, der z.B. nach dem FMCW-Prinzip arbeitet, kann das gewandelte Signal z.B. ein gemischtes Zwischenfrequenzsignal sein, das in seiner digitalen Repräsentation als sogenannte Beat-Kurve im Speicher der Sensoreinheit vorliegt. Diese Beat-Kurve kann - z.B. bei präzisen Füllstandsensoren - mehrere tausend Abtastpunkte umfassen. Eine Übertragung der gesamten Rohdaten, d.h. der Abtastpunkte und/oder weiterer Daten, zu einer Cloud und die alleinige Prozessierung der Daten auf einem Cloud-Server kann, z.B. aufgrund der enormen Datenmenge, von Nachteil sein, in besonderem Maße, wenn es sich bei der Sensoreinheit 100 um einen autarken oder gar batteriebetriebenen Sensor handelt. Dabei kann der Übertragungskanal zur Cloud eine informationstechnische Engstelle darstellen, insbesondere während einer verteilten Berechnung innerhalb des Gesamtsystems 10. Wenn beispielsweise eine funkbasierte Übertragung verwendet wird, kann dies mit einem gewissen, teilweise sehr hohen, Energiebedarf verbunden sein, der den Energiespeicher der Sensoreinheit 100 belasten kann. Es kann daher für einen autarken Sensor vorteilhaft sein, die Menge der übertragenen Daten zu reduzieren. Dies kann beispielsweise mittels des oben und/oder nachfolgend beschriebenen Verfahren geschehen.

Bei einem FMCW System kann z.B. nach einer digitalen Fensterung der Beat-Kurve eine FFT (Fast Fourier Transformation) durchgeführt und das Ergebnis logarithmiert werden. Dadurch kann eine Datenreduktion stattfinden. Der Informationsverlust, der durch die Datenreduktion entsteht, kann jedoch in vielen Fällen keine Auswirkung auf die Güte der Füllstandmessung haben, insbesondere kann es sein, dass dies nicht von weiteren äußeren Faktoren wie beispielsweise von benutzerseitig vorgebbaren, anwendungsabhängigen Parametern abhängig ist. Das Ergebnis dieser statischen Vorverarbeitung der Signale mit einhergehender erster Reduktion der Datenmenge wird in der Regel als Echokurve bezeichnet. In einem nächsten Schritt werden aus der Echokurve charakteristische Kennwerte - z.B. Position, Amplitude, etc. - einzelner Reflexionsstellen bestimmt. Eine Entscheidung auf eine bestimmte Reflexionsstelle, deren physikalischer Ursprung die Oberfläche 65 des Mediums 60 ist, kann in zumindest einigen Fällen in der Sensoreinheit aufgrund fehlender Informationen zur Anwendung und den äußeren Umständen nicht zuverlässig getroffen werden. Daher können in einem nächsten Schritt die extrahierten Kennwerte der Reflexionsstellen - z.B. mittels Schmalband-Funk wie z.B. LoRa, Sigfox, NB-IoT, CAT-M - in eine Cloud 220 übertragen werden. Die Cloud 220 kann z.B. einen Server 200 und eine Datenbank 205 aufweisen. Bei der Datenübertragung können weitere Teilnehmer wie z.B. Empfangsantennen und Gateways beteiligt sein. Die übertragenen Daten weisen in vielen Fällen nur noch einen Umfang von wenigen Bytes auf; dies kann eine erhebliche Datenreduktion, verglichen mit der Übertragung der gesamten Echokurve, darstellen. So kann beispielsweise, gemessen an den ursprünglichen Abtastwerten, eine Datenreduktion um einen Faktor von 1000 und höher erreicht werden. Es sei angemerkt, dass in den übertragenen Daten noch keine Entscheidungen im Hinblick auf den korrekten Messwert enthalten sind. Dieser Aspekt kann beispielsweise die Möglichkeit eröffnen, auf eine Parametrierung des Messgeräts zu verzichten.

In der Cloud 220 findet, z.B. unter Zuhilfenahme weiterer Informationen, die Bestimmung eines Füllstands oder Grenzstands statt, d.h. die eigentliche Entscheidung, welche der übermittelten charakteristischen Kennwerte eine von der Oberfläche 65 eines Mediums 60 stammende Reflexion dieses Messgerät 100 repräsentiert. Anhand der Kennwerte dieser Reflexionsstelle kann der Messwert, z.B. der Füllstand, bestimmt werden. Auch weitere Schritte, wie Linearisierung und Skalierung können in der Cloud durchgeführt werden, damit dem Anwender 260 der Füllstand in der gewünschten aufbereiteten Form über eine Anzeige, einen Kommunikationskanal 265, etc. nach außen hin verfügbar gemacht werden kann.

Zusätzlich kann ein zweiter Akteur 270 über einen Kommunikationskanal 275 Eingriffe in die cloudseitig implementierte Signalverarbeitungskette oder Konfigurationen vornehmen, ohne direkt an der Sensoreinheit vor Ort präsent sein zu müssen.

In einer alternativen Ausführungsform kann vorgesehen sein, nach erfolgter Entscheidung auf eine von der Oberfläche 65 eines Mediums 60 stammende Reflexion identifizierende Kennwerte, beispielsweise charakteristische Kennwerte der identifizierten Füllgutreflexionsstelle, über den Funkkanal an die Sensoreinheit zurück zu übermitteln. In der Sensoreinheit kann aufgrund des identifizierenden Kennwertes oder der charakteristischen Kennwerte der identifizierten Füllgutreflexionsstelle (beispielsweise "Echo 3") anhand der dort verfügbaren, großen Menge an Punkten eines Signals, beispielsweise einer Echokurve, mit erhöhter Präzision ein Messwert von der Recheneinheit des Sensors bestimmt werden. Dieser Messwert - umfassend wenige Bytes an Nutzdaten - kann erneut über den Funkkanal an die Cloud zurück übermittelt werden, wo weitere Schritte wie Linearisierung und Skalierung durchgeführt werden können, und der resultierende Messwert nach außen hin bereitgestellt werden kann.

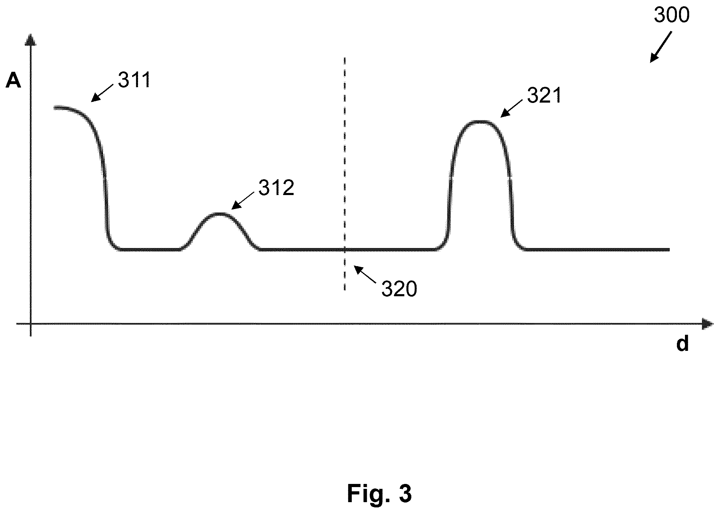

**Fig. 3** zeigt schematisch eine Echokurve 300 mit zwei Echos. Diese können z.B. von einem generischen Radarsensor stammen, der für Distanzen von bis zu 30 m ausgelegt sein kann. Es sind drei Reflexionen 311, 312 und 321 sichtbar. Reflexion 311 kann vom Sensor oder von dem Server verworfen werden, weil diese Reflexion zu nahe an der Antenne 122 (siehe **Fig. 1**) gemessen wurde. Die Sensoreinheit kann in einer Ausführungsform nur die charakteristischen Kennwerte der Reflexionen 312 und 321 übertragen, in einer anderen Ausführungsform zusätzlich den Kennwert der Reflexion 311. Da die Anwendungsparameter, welche das Medium und die Behälterhöhe 320 beschreiben, in der Cloud vorhanden sind, kann dort eine korrekte Entscheidung, welche der beiden Reflexionen von der Oberfläche des Mediums stammt, getroffen werden. Unter Betrachtung der parametrierten Behälterhöhe kann der Cloud-Dienst z.B. auch die Reflexion 321 verwerfen, weil erkannt wird, dass diese Reflexion keine Relevanz für die Füllstandbestimmung hat. Beispielsweise kann für diese Entscheidung eine Historie der letzten Füllhöhen herangezogen werden.

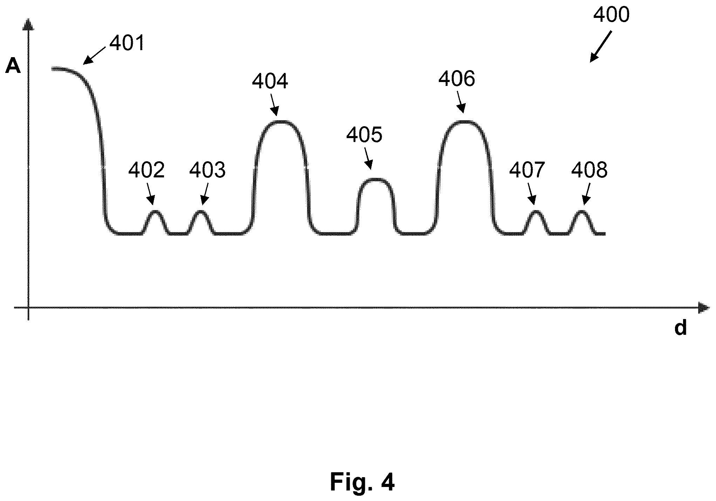

**Fig. 4** zeigt schematisch eine Echokurve 400, bei der der Sensor bereits eine Vorselektion durchführt. Die Echokurve 400 weist acht Reflexionen 401 bis 408 auf, die von unterschiedlichen Reflexionsstellen wie beispielsweise von der Oberfläche des Mediums und von Störern stammen können. Der erste Teil der Signalverarbeitungskette ermittelt nicht nur die Reflexionen und bestimmt deren charakteristische Kennwerte, sondern führt im einem Schritt der Datenreduktion eine Vorab-Selektion an Reflexionen und/oder die Bestimmung von signifikanten Reflexionsstellen durch, ohne dabei die generische Eigenschaft der Sensoreinheit zu beschneiden. So werden nur die Reflexionen verworfen, die - für den Sensor einfach erkennbar - keinesfalls von einer Füllgutoberfläche stammen können. Diese Auswahl kann beispielsweise mit vordefinierten, teilweise im Stand der Technik bekannten, Algorithmen anhand von Ort und Amplitude getroffen werden. In dem Beispiel zeigen nur die Reflexionen 404 und 406 aufgrund der Höhe ihrer Amplitude Eigenschaften, die von einer Füllgutoberfläche stammen können. So werden folglich in den nachfolgenden Schritten auch nur die Kennwerte dieser Echos 404 und 406 als signifikante Reflexionsstellen in die Cloud übertragen.

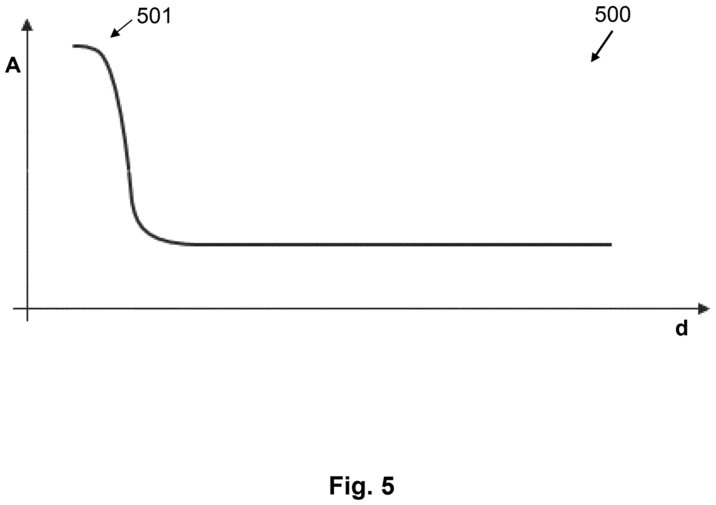

**Fig. 5** zeigt schematisch eine Echokurve 500, wie sie sowohl bei einem leeren als auch bei einem überfüllten Tank auftreten kann. Überfüllt bedeutet hier, dass das Füllmedium die Antenne oder Behälterwand unterhalb des Sensors berührt. Anhand dieser Echokurve 500, die nur eine einzelne Reflexion 501 aufweist, kann keine Aussage getroffen werden, wie der aktuelle Füllstand im Tank ist. Das Verfahren kann daher vorsehen, nur eine Information zum Cloud-Service zu schicken, dass keine signifikante Reflexion erkannt wurde. Der Cloud-Service oder Server kann dann aus dem Trend früherer Messungen entscheiden, ob der Behälter leer oder gar überfüllt ist. Zudem können weitere Daten mit dem Algorithmus zur Füllstandentscheidung verknüpft werden. Logistik-Daten wie die Position eines Behälters in Verbindung mit einer kürzlich erfolgten Befüllung können Hinweise auf den korrekten Füllstand liefern. Aus Historiendaten kann zudem abgeleitet werden, wo Behälter üblicherweise befüllt und wo diese entleert werden. Weiterhin können Informationen aus einem Leitsystem, das eine Befüllung veranlasste, und dem Cloud-Service zur Verfügung gestellt werden, essentielle Hinweise auf den tatsächlichen Füllstand im Tank liefern. Auf diese Weise kann beispielsweise aus einer Echokurve, mittels derer "eigentlich" keine Aussage über den Füllstand des Behälters getroffen werden kann, vorteilhafterweise eine qualifizierte Aussage zum tatsächlichen Füllstand gemacht werden, und es kann insbesondere eine Unterscheidung zwischen Überfüllung und leerem Behälter in der Cloud vorgenommen werden.

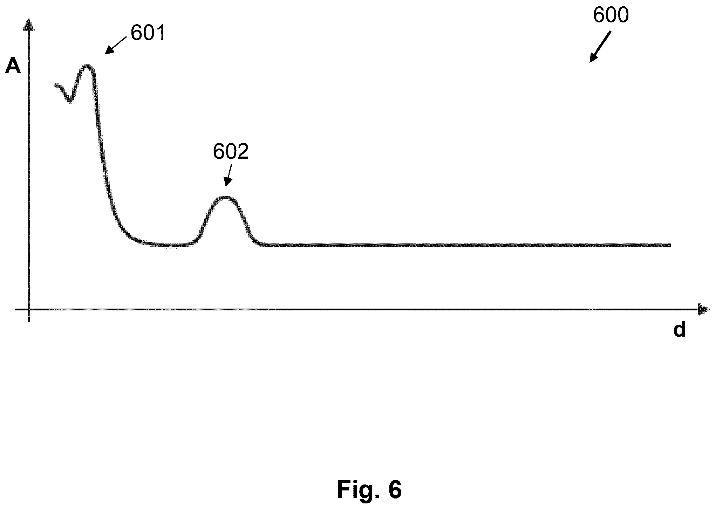

**Fig. 6** zeigt schematisch eine Echokurve 600, wie sie beispielsweise im Anhaftungsfall mit Kondensat gemessen werden kann. Die markante Reflexion im Nahbereich 601 kann z.B. durch Kondensat an der Behälterdecke oder Antenne entstanden. Kondensat tritt überwiegend bei Temperaturschwankungen auf, die im Tagesverlauf und bei unterschiedlichen Witterungsverhältnissen entstehen. Ein Sensor, der nur zyklisch kurz aufwacht, kann einen Temperaturverlauf nicht erfassen. Ein Cloud-Service hat jedoch Zugriff auf die Tageszeiten und Wetterdaten, und kann dadurch alleine aus den beiden Reflexionen auf den richtigen Füllstand schließen, hier 602.

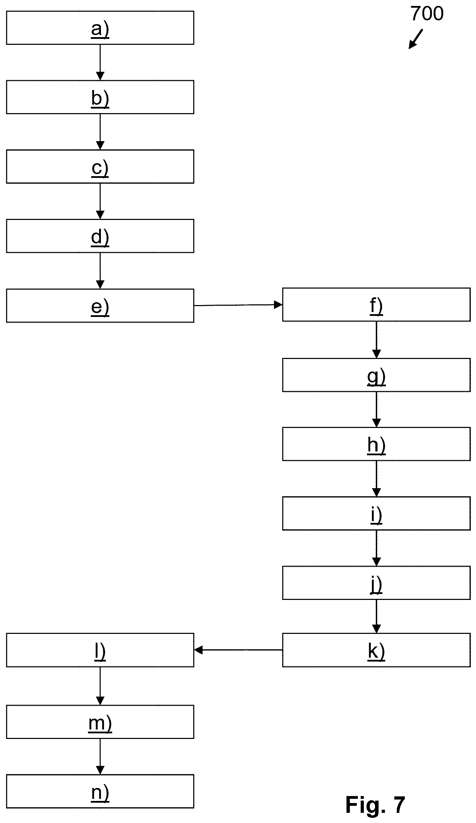

**Fig. 7** zeigt ein Flussdiagramm 700 mit einem Verfahren zur verteilten Bestimmung eines Füllstands oder Grenzstands eines Füllgutes gemäß einer Ausführungsform. Das gezeigte Verfahren kann optionale Schritte aufweisen.

In einem Schritt a) findet eine Montage eines Sensors an einer Messstelle statt. In einem Schritt b) wird, durch den Sensor, ein Messsignal ausgesandt. In einem Schritt c) wird, durch den Sensor, das reflektierte Messsignal empfangen und eine Echokurve berechnet. In einem Schritt d) werden, durch den Sensor, charakteristische Kennwerte signifikanter Reflexionsstellen der Echokurve bestimmt. In einem Schritt e) werden, durch den Sensor, ausschließlich die charakteristischen Kennwerte signifikanter Reflexionsstellen an einen Server übertragen, wobei die charakteristischen Kennwerte zur Bestimmung des Füllstands in einem Entscheidungsprozess verwendbar sind. Die weiteren Schritte finden auf dem Server und/oder einer Cloud statt. In einem Schritt f) werden, durch den Server, die charakteristischen Kennwerte signifikanter Reflexionsstellen empfangen. In einem Schritt g) werden, durch den Server, die charakteristischen Kennwerte signifikanter Reflexionsstellen mittels des Entscheidungsprozesses und/oder unter Verwendung von Parameterdaten in den Füllstand des Füllgutes transformiert. In einem Schritt h) werden, durch den Server, Historieninformationen der charakteristischen Kennwerte der Reflexionsstellen und/oder des Füllstands mittels eines Tracking Algorithmus gebildet. In einem Schritt i) werden die Historieninformationen auf die empfangenen charakteristischen Kennwerte der Reflexionsstellen angewendet.

In einem Schritt j) wird, durch den Server, eine ausgewählte Teilmenge der charakteristischen Kennwerte signifikanter Reflexionsstellen bestimmt. In einem Schritt k) wird, durch den Server, die ausgewählte Teilmenge der charakteristischen Kennwerte signifikanter Reflexionsstellen an den Sensor übertragen. In einem Schritt I) wird, durch den Sensor, die ausgewählte Teilmenge der charakteristischen Kennwerte signifikanter Reflexionsstellen empfangen. In einem Schritt m) wird, durch den Sensor, die ausgewählte Teilmenge der charakteristischen Kennwerte signifikanter Reflexionsstellen verfeinert. In einem Schritt n) werden, durch den Sensor, verfeinerte charakteristische Kennwerte der ausgewählten Teilmenge der charakteristischen Kennwerte signifikanter Reflexionsstellen übertragen.

### Liste der Bezugszeichen

- 10: System
- 20: Messstelle
- 50: Tank
- 60: Füllgut, Medium
- 65: Füllstand, Oberfläche
- 100: Messgerät, Sensoreinheit
- 110: Gehäuse
- 120: Messdatenbestimmungseinheit
- 122: Messantenne
- 125: Messsignal
- 140: Kommunikationseinrichtung
- 142: Kommunikationsantenne
- 150: Prozessor
- 160: steuerbarer Schalter
- 180: Akkumulator, Batterie
- 200: Server
- 205: Datenbank
- 212: Kommunikationsantenne
- 220: Cloud
- 260: Anwender
- 265: Kommunikationskanal
- 270: zweiter Akteur
- 275: Kommunikationskanal
- 300: Echokurve
- 311, 312: Reflexionen
- 320: Behälterhöhe
- 321: Reflexion
- 400: Echokurve
- 401 - 408: Reflexionen
- 500: Echokurve
- 501: Reflexion
- 600: Echokurve
- 601, 602: Reflexion
- 700: Flussdiagramm

## Patentansprüche

1. Verfahren zur verteilten Bestimmung eines Füllstands (65) oder Grenzstands eines Füllgutes (60) mittels eines Sensors (100), mit den Schritten:
a) Montage des Sensors (100) an einer Messstelle (20);
b) Aussenden, durch den Sensor (100), eines Messsignals (125);
c) Empfangen, durch den Sensor (100), des reflektierten Messsignals (125) und Berechnung einer Echokurve (300, 400, 500, 600).
d) Bestimmen, durch den Sensor (100), von charakteristischen Kennwerten signifikanter Reflexionsstellen (312, 404, 406, 602) der Echokurve (300, 400, 500, 600), wobei die Anzahl der signifikanten Reflexionsstellen (312, 404, 406, 602) deutlich geringer ist als die Anzahl der digitalen Abtastpunkte der Echokurve (300, 400, 500, 600);
e) Übertragen, durch den Sensor (100), ausschließlich der charakteristischen Kennwerte signifikanter Reflexionsstellen (312, 404, 406, 602) an einen Server (200),
**dadurch gekennzeichnet, dass** die charakteristischen Kennwerte zur Bestimmung des
Füllstands (65) in einem Entscheidungsprozess verwendbar sind,
und dass das Verfahren ferner folgende Schritte beinhaltet:
j) Bestimmen, durch den Server (200), einer ausgewählten Teilmenge der charakteristischen Kennwerte signifikanter Reflexionsstellen (312, 404, 406, 602);
k) Übertragen, durch den Server (200), der ausgewählten Teilmenge der charakteristischen Kennwerte signifikanter Reflexionsstellen (312, 404, 406, 602) an den Sensor (100);
l) Empfangen, durch den Sensor (100), der ausgewählten Teilmenge der charakteristischen Kennwerte signifikanter Reflexionsstellen (312, 404, 406, 602);
m) Verfeinern, durch den Sensor (100), der ausgewählten Teilmenge der charakteristischen Kennwerte signifikanter Reflexionsstellen (312, 404, 406, 602); und
n) Übertragen, durch den Sensor (100), von verfeinerten charakteristischen Kennwerten der ausgewählten Teilmenge der charakteristischen Kennwerte signifikanter Reflexionsstellen (312, 404, 406, 602).

2. Verfahren nach Anspruch 1,
wobei der Sensor (100) als ein kundenseitig nicht-parametrierter Sensor ausgeführt ist, wobei Parameterdaten eine Behälterhöhe und/oder einen Behälterquerschnitt umfassen.

3. Verfahren nach einem der vorhergehenden Ansprüche,
wobei die Übertragung von dem Sensor (100) an den Server (200) unidirektional ausgeführt ist.

4. Verfahren nach einem der vorhergehenden Ansprüche,
wobei die charakteristischen Kennwerte der signifikanten Reflexionsstellen (312, 404, 406, 602) nur solche lokalen Amplitudenmaxima der Echokurve (300, 400, 500, 600) umfassen, die einen vordefinierten Amplitudenschwellwert überschreiten.

5. Verfahren nach einem der vorhergehenden Ansprüche,
wobei nur eine ausgezeichnete Untermenge der charakteristischen Kennwerte signifikanter Reflexionsstellen (312, 404, 406, 602) an den Server (200) übertragen wird,
wobei die ausgezeichnete Untermenge durch ein oder mehrere höchste Amplitudenmaxima und/oder durch Überschreiten einer minimalen räumlichen Entfernung von einem Sender des Messsignals (125) bestimmt ist.

6. Verfahren zur verteilten Bestimmung eines Füllstands (65) oder Grenzstands eines Füllgutes (60) mittels eines Servers (200), mit den Schritten:
f) Empfangen, durch den Server (200), von charakteristischen Kennwerten signifikanter Reflexionsstellen (312, 404, 406, 602), welche durch die Schritte b) bis e) des Anspruchs 1 erzeugt wurden;
g) Transformieren, durch den Server (200) mittels des Entscheidungsprozesses und/oder unter Verwendung von Parameterdaten, der charakteristischen Kennwerte signifikanter Reflexionsstellen (312, 404, 406, 602) in den Füllstand (65) des Füllgutes (60) und/oder in einen den Füllstand des Füllgutes repräsentierenden Wert;
h) optional, bilden, durch den Server (200), von Historieninformationen der charakteristischen Kennwerte der Reflexionsstellen (312, 404, 406, 602) und/oder des Füllstands (65) mittels eines Tracking Algorithmus; und
i) optional, anwenden, durch den Server (200), der Historieninformationen auf die empfangenen charakteristischen Kennwerte der Reflexionsstellen (312, 404, 406, 602).

7. Verfahren nach Anspruch 6,
wobei die Parameterdaten weiterhin eine Eigenschaft des Mediums und/oder eine Selektion eines Anwendungstyps umfassen, und/oder wobei das Transformieren der charakteristischen Kennwerte signifikanter Reflexionsstellen (312, 404, 406, 602) unter Berücksichtigung von Uhrzeit, Wetterdaten, Logistikdaten und/oder gelernten Mustern durchgeführt wird.

8. Sensor (100), eingerichtet zur Durchführung der Schritte a) bis e) und der
Schritte I) bis n) gemäß Anspruch 1 und aufweisend: Mittel zur Montage des Sensors (100) an einer Messstelle (20), einen Prozessor (150), Mittel (122) zum Aussenden und Empfangen eines Messsignals, sowie Mittel (140) zum Empfangen von Daten von einem Server (200) und zum Übertragen von Daten an einen Server (200).

9. Server (200), eingerichtet zur Durchführung der Schritte f) und g) und, optional, der Schritte h) und i) gemäß Anspruch 6 und der Schritte j) und k) gemäß Anspruch 1.

10. System (10) zur verteilten Bestimmung eines Füllstands (65) oder Grenzstands eines Füllgutes (60), das System (10) aufweisend:
einen Sensor (100) nach Anspruch 8; und
einen Server (200) nach Anspruch 9.

11. Verwendung eines Sensors (100) nach Anspruch 8, eines Servers (200) nach Anspruch 9 und/oder eines Systems (10) nach Anspruch 10 zur verteilten Bestimmung eines Füllstands (65) oder Grenzstands eines Füllgutes (60).

12. Programmelement, welches, wenn es auf einem Sensor (100) nach
Anspruch 8 und/oder einem Server (200) nach Anspruch 9 ausgeführt
wird, den Sensor (100) und/oder den Server (200) anleitet, das Verfahren nach einem der Ansprüche 1 bis 8 durchzuführen.

13. Computerlesbares Medium, auf dem ein Programmelement nach Anspruch 12 gespeichert ist.

## Claims

1. A method for distributed determining a filling level (65) or a limit level of a filling material (60) by means of a sensor (100), comprising the steps of:
a) mounting the sensor (100) at a measuring point (20);
b) transmitting, by the sensor (100), a measurement signal (125);
c) receiving, by the sensor (100), the reflected measurement signal (125) and calculating an echo curve (300, 400, 500, 600);
d) determining, by the sensor (100), characteristic values of significant reflection points (312, 404, 406, 602) of the echo curve (300, 400, 500, 600), wherein the number of significant reflection points (312, 404, 406, 602) is significantly less than the number of digital sampling points of the echo curve (300, 400, 500, 600);
e) transmitting, by the sensor (100), only the characteristic values of significant reflection points (312, 404, 406, 602) to a server (200),
**characterized in that** the characteristic values are usable for determining the level (65) in a decision process, and **in that** the method further comprises the following steps:
j) determining, by the server (200), a selected subset of the characteristic values of significant reflection points (312, 404, 406, 602);
k) transmitting, by the server (200), the selected subset of the characteristic values of significant reflection points (312, 404, 406, 602) to the sensor (100);
l) receiving, by the sensor (100), the selected subset of the characteristic values of significant reflectance locations (312, 404, 406, 602);
m) refining, by the sensor (100), the selected subset of the characteristic values of significant reflectance locations (312, 404, 406, 602); and
n) transmitting, by the sensor (100), refined characteristic values of the selected subset of the characteristic values of significant reflection spots (312, 404, 406, 602).

2. The method according to claim 1,
wherein the sensor (100) is designed as a sensor that is not parameterized by the customer, wherein parameter data comprise a container height and/or a container cross-section.

3. The method according to one of the preceding claims,
wherein the transmission from the sensor (100) to the server (200) is unidirectional.

4. The method according to any one of the preceding claims,
wherein the characteristic values of the significant reflection points (312, 404, 406, 602) comprise only those local amplitude maxima of the echo curve (300, 400, 500, 600) that exceed a predefined amplitude threshold.

5. The method according to any one of the preceding claims,
wherein only a distinguished subset of the characteristic values of significant reflection points (312, 404, 406, 602) is transmitted to the server (200),
wherein the distinguished subset is determined by one or more highest amplitude maxima and/or by exceeding a minimum spatial distance from a transmitter of the measurement signal (125).

6. A method for distributed determining a filling level (65) or limit level of a filling material (60) by means of a server (200), comprising the steps of:
f) receiving, by the server (200), characteristic values of significant reflection points (312, 404, 406, 602) generated by steps b) to e) of claim 1;
g) transforming, by the server (200) by means of the decision process and/or using parameter data, the characteristic values of significant reflection points (312, 404, 406, 602) into the filling level (65) of the filling material (60) and/or into a value representing the filling level of the filling material;
h) optionally, forming, by the server (200), history information of the characteristic values of the reflection points (312, 404, 406, 602) and/or the level (65) by means of a tracking algorithm; and
i) optionally, applying, by the server (200), the history information to the received characteristic values of the reflection points (312, 404, 406, 602).

7. The method according to claim 6,
wherein the parameter data further comprises a property of the medium and/or a selection of an application type, and/or
wherein the transforming of the characteristic values of significant reflection points (312, 404, 406, 602) is performed by taking into account time, weather data, logistic data and/or learnt patterns.

8. A sensor (100) configured to perform steps a) to e) and steps l) to n) according to claim 1 and comprising:
means for mounting the sensor (100) at a measuring point (20), a processor (150), means (122) for transmitting and receiving a measuring signal, and means (140) for receiving data from a server (200).

9. A server (200) configured to perform steps f) and g) and, optionally, steps h) and i) according to claim 6 and steps j) and k) according to claim 1.

10. A system (10) for distributed determining a filling level (65) or limit level of a filling material (60), the system (10) comprising:
a sensor (100) according to claim 8; and
a server (200) according to claim 9.

11. Use of a sensor (100) according to claim 8, a server (200) according to claim 9 and/or a system (10) according to claim 10 for distributed determining a filling level (65) or limit level of a filling material (60).

12. A program element which, when executed on a sensor (100) according to claim 8 and/or a server (200) according to claim 9, instructs the sensor (100) and/or the server (200) to perform the method according to any one of claims 1 to 8.

13. A computer-readable medium on which a program element according to claim 12 is stored.

## Revendications

1. Procédé de détermination distribuée d'un niveau de remplissage (65) ou un niveau limite d'un produit de remplissage (60) au moyen d'un capteur (100), comprenant les étapes suivantes :
a) montage du capteur (100) à un point de mesure (20) ;
b) émission, par le capteur (100), d'un signal de mesure (125) ;
c) réception, par le capteur (100), du signal de mesure réfléchi (125) et calcul d'une courbe d'écho (300, 400, 500, 600) ;
d) détermination, par le capteur (100), de valeurs caractéristiques de points de réflexion significatifs (312, 404, 406, 602) de la courbe d'écho (300, 400, 500, 600), le nombre des points de réflexion significatifs (312, 404, 406, 602) étant nettement inférieur au nombre de points d'échantillonnage numériques de la courbe d'écho (300, 400, 500, 600) ;
e) transmission, par le capteur (100), exclusivement des valeurs caractéristiques de points de réflexion significatifs (312, 404, 406, 602) à un serveur (200),
**caractérisé en ce que**
les valeurs caractéristiques sont utilisables dans un processus de décision pour déterminer le niveau de remplissage (65)
et **en ce que** le procédé comprend en outre les étapes suivantes :
j) détermination, par le serveur (200), d'un sous-ensemble sélectionné des valeurs caractéristiques de points de réflexion significatifs (312, 404, 406, 602) ;
k) transmission, par le serveur (200), du sous-ensemble sélectionné des valeurs caractéristiques de points de réflexion significatifs (312, 404, 406, 602) au capteur (100) ;
l) réception, par le capteur (100), du sous-ensemble sélectionné des valeurs caractéristiques de points de réflexion significatifs (312, 404, 406, 602) ;
m) affinage, par le capteur (100), du sous-ensemble sélectionné des valeurs caractéristiques de points de réflexion significatifs (312, 404, 406, 602) ; et
n) transmission, par le capteur (100), des valeurs caractéristiques affinées du sous-ensemble sélectionné des valeurs caractéristiques de points de réflexion significatifs (312, 404, 406, 602).

2. Procédé selon la revendication 1,
dans lequel le capteur (100) est réalisé sous la forme d'un capteur non paramétré par le client, les données de paramétrage comprenant une hauteur de récipient et/ou une section transversale de récipient.

3. Procédé selon l'une des revendications précédentes,
dans lequel la transmission du capteur (100) au serveur (200) est réalisée de manière unidirectionnelle.

4. Procédé selon l'une des revendications précédentes,
dans lequel les valeurs caractéristiques des points de réflexion significatifs (312, 404, 406, 602) ne comprennent que les maxima d'amplitude locaux de la courbe d'écho (300, 400, 500, 600) qui dépassent une valeur seuil d'amplitude prédéfinie.

5. Procédé selon l'une des revendications précédentes,
dans lequel seul un sous-ensemble distingué des valeurs caractéristiques de points de réflexion significatifs (312, 404, 406, 602) est transmis au serveur (200),
dans lequel le sous-ensemble distingué est déterminé par un ou plusieurs maxima d'amplitude les plus élevés et/ou par le dépassement d'une distance spatiale minimale par rapport à un émetteur du signal de mesure (125).

6. Procédé de détermination distribuée d'un niveau de remplissage (65) ou d'un niveau limite d'un produit de remplissage (60) au moyen d'un serveur (200), comprenant les étapes suivantes :
f) réception, par le serveur (200), de valeurs caractéristiques de points de réflexion significatifs (312, 404, 406, 602) qui ont été générées par les étapes b) à e) de la revendication 1 ;
g) transformation, par le serveur (200) au moyen du processus de décision et/ou en utilisant des données de paramètres, des valeurs caractéristiques de points de réflexion significatifs (312, 404, 406, 602) en niveau de remplissage (65) du produit de remplissage (60) et/ou en une valeur représentant le niveau de remplissage du produit de remplissage ;
h) en option, formation, par le serveur (200), d'informations historiques sur les valeurs caractéristiques des points de réflexion (312, 404, 406, 602) et/ou du niveau de remplissage (65) à l'aide d'un algorithme de suivi ; et
i) en option, application, par le serveur (200), des informations historiques aux valeurs caractéristiques reçues des points de réflexion (312, 404, 406, 602).

7. Procédé selon la revendication 6,
dans lequel les données de paramètres comprennent en outre une propriété du milieu et/ou une sélection d'un type d'application, et/ou
dans lequel la transformation des valeurs caractéristiques de points de réflexion significatifs (312, 404, 406, 602) est effectuée en tenant compte de l'heure, de données météorologiques, de données logistiques et/ou de modèles appris.

8. Capteur (100) conçu pour mettre en œuvre les étapes a) à e) et les étapes l) à n) selon la revendication 1 et présentant : des moyens pour monter le capteur (100) à un point de mesure (20), un processeur (150), des moyens (122) pour émettre et recevoir un signal de mesure ainsi que des moyens (140) pour recevoir des données d'un serveur (200) et pour transmettre des données à un serveur (200).

9. Serveur (200) conçu pour mettre en œuvre les étapes f) et g) et, en option, les étapes h) et i) selon la revendication 6 et les étapes j) et k) selon la revendication 1.

10. Système (10) de détermination distribuée d'un niveau de remplissage (65) ou d'un niveau limite d'un produit de remplissage (60), le système (10) présentant :
un capteur (100) selon la revendication 8 ; et
un serveur (200) selon la revendication 9.

11. Utilisation d'un capteur (100) selon la revendication 8, d'un serveur (200) selon la revendication 9 et/ou d'un système (10) selon la revendication 10 pour la détermination distribuée d'un niveau de remplissage (65) ou d'un niveau limite d'un produit de remplissage (60).

12. Élément de programme qui, lorsqu'il est exécuté sur un capteur (100) selon la revendication 8 et/ou un serveur (200) selon la revendication 9, amène le capteur (100) et/ou le serveur (200) à mettre en œuvre le procédé selon l'une des revendications 1 à 8.

13. Support lisible par ordinateur sur lequel est enregistré un élément de programme selon la revendication 12.
